# EUROPÄISCHE PATENTANMELDUNG

(11) **EP 4 102 407 A1**
(43) Veröffentlichungstag der Anmeldung: **14.12.2022**
(21) Anmeldenummer: 21178316.2
(22) Anmeldetag: 08.06.2021
(51) Int. Cl.: G06N 3/04, G06N 3/08

(54) **ERFASSEN EINES WERTS EINER PHYSIKALISCHEN GRÖSSE EINES TECHNISCHEN SYSTEMS**

(71) Anmelder: Siemens Aktiengesellschaft, 80333 München (DE)
(72) Erfinder: Botero Halblaub, Andrés, 85614 Kirchseeon (DE); Brandstetter, Veronika, 81673 München (DE); Held, Harald, 85461 Bockhorn (DE)

(57) **Zusammenfassung**

Die Erfindung betrifft eine Vorrichtung (100), wie z.B. einen virtuellen Sensor, zum Erfassen eines Werts einer physikalischen Größe eines technischen Systems. Die Vorrichtung umfasst ein generatives maschinelles Lernmodell (GML), das z.B., auf Basis Generative Adversarial Networks (kurz: GANs), derart trainiert ist, in Abhängigkeit mindestens eines Werts einer ersten physikalischen Größe eines technischen Systems mindestens einen Wert einer zweiten physikalischen Größe des technischen Systems zu erzeugen und auszugeben. Die Vorrichtung ist derart eingerichtet, mittels des generativen, maschinellen Lernmodells (GML) einen Wert (V2) einer zweiten physikalischen Größe (PQ1_2) des technischen Systems in Abhängigkeit eines Messwerts (V1) einer ersten physikalischen Größe (PQ1 1) des technischen Systems zu generieren und auszugeben.

## Beschreibung

Die Erfindung betrifft eine Vorrichtung, ein computerimplementiertes Verfahren und ein Computerprogrammprodukt zum Erfassen eines Werts einer physikalischen Größe eines technischen Systems mittels eines generativen, maschinellen Lernmodells, wie z.B. Generative Adversarial Networks. Außerdem betrifft die Erfindung ein computerimplementiertes Verfahren und ein Computerprogrammprodukt zum Bereitstellen eines solchen generativen, maschinellen Lernmodells.

Parameter oder physikalische Größen eines technischen Systems, wie z.B. Temperatur, Druck, etc., können während des Betriebs des Systems mittels physikalischer bzw. realer Sensoren erfasst und somit überwacht werden. Allerdings sind oft nicht alle physikalischen Größen eines technischen Systems derart messbar, beispielsweise da eine Messposition nicht oder nur schlecht zugänglich ist. Um Werte solcher physikalischen Größen dennoch zu bestimmen, werden üblicherweise Kalman Filter als virtuelle Sensoren angewandt, um die nicht oder nur schlecht messbaren Zustände abzuschätzen. Solche Abschätzungen benötigen allerdings einfache computergestützte Simulationsmodelle, um die Abschätzungen in kurzer Zeit berechnen zu können. Allerdings sind oft keine einfachen, schnell zu berechnenden Simulationsmodelle für komplexe physikalische Vorgänge verfügbar.

Es ist daher eine Aufgabe der Erfindung, die Abschätzung von Werten physikalischer Größen eines technischen Systems einfacher zu gestalten.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt. Gemäß einem ersten Aspekt betrifft die Erfindung eine Vorrichtung zum Erfassen eines Werts einer physikalischen Größe eines ersten technischen Systems, wobei das erste technische System durch eine erste Systemangabe gekennzeichnet ist, umfassend:
- eine Schnittstelle, die derart eingerichtet ist, einen mittels eines physikalischen Sensors erfassten Messwert einer ersten physikalischen Größe des ersten technischen Systems einzulesen,
- eine Speichereinheit, die derart eingerichtet ist, ein generatives, maschinelles Lernmodell zu speichern,
   - wobei das generative, maschinelle Lernmodell eingerichtet ist, in Abhängigkeit mindestens eines Werts einer ersten physikalischen Größe eines zweiten technischen Systems mindestens einen Wert einer zweiten physikalischen Größe des zweiten technischen Systems zu erzeugen und auszugeben,
   - wobei das zweite technische System durch eine zweite Systemangabe gekennzeichnet ist und die zweite Systemangabe mit der ersten Systemangabe zumindest teilweise übereinstimmt,
- einen Messwertgenerator, der derart eingerichtet ist, mittels des generativen, maschinellen Lernmodells einen Wert einer zweiten physikalischen Größe des ersten technischen Systems in Abhängigkeit des Messwerts der ersten physikalischen Größe zu generieren, wobei die erste physikalische Größe des ersten technischen Systems der ersten physikalischen Größe des zweiten technischen Systems und die zweite physikalische Größe des ersten technischen Systems der zweiten physikalischen Größe des zweiten technischen Systems entspricht, und
- eine Ausgabeeinheit, die derart eingerichtet ist, den generierten Wert der zweiten physikalischen Größe des ersten technischen Systems auszugeben.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter einer "Speichereinheit" kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einer "Einheit" kann im Zusammenhang mit der Erfindung beispielsweise ein Prozessor zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle, wie z. B. eine Netzwerkschnittstelle, eine Kommunikationsschnittstelle oder eine Schnittstelle zu einer Speichereinheit. Über eine solche Schnittstelle können beispielsweise beim Bereitstellen entsprechende Daten und/oder Informationen übermittelt und/oder gesendet und/oder abgerufen und/oder empfangen werden.

Unter einem "technischen System" kann insbesondere eine Maschine, ein Gerät, oder auch eine Anlage, wie z.B. eine Fabrikanlage, umfassend mehrere Maschinen und/oder Geräte verstanden werden. Beispielsweise ist das technische System eine Produktionsmaschine, eine Werkzeugmaschine, oder ähnliches. Ein technisches System kann beispielsweise auch ein Motor oder eine Turbine sein.

Unter einer "Systemangabe" kann insbesondere eine technische Angabe verstanden werden, die eine technische Größe, Eigenschaft oder ein technisches Merkmal des technischen Systems beschreibt. Das technische System kann durch die Systemangabe charakterisiert werden, d.h. die Systemangabe ist spezifisch für ein technisches System. Beispielsweise handelt es sich bei einer Systemangabe um einen Parameter oder einen Typ/Systemtyp des technischen Systems. Eine Systemangabe kann insbesondere auch als Systemspezifikation/Spezifikation bezeichnet werden.

Unter "einem physikalischen Sensor" kann insbesondere ein Detektor, ein Messgrößen- oder Messaufnehmer oder Messfühler verstanden werden. Ein physikalischer Sensor ist insbesondere eine Hardware-Komponente oder ein Hardware-Bauteil (Hardware-Sensor), das physikalische und/oder chemische Eigenschaften und/oder stoffliche Beschaffenheit eines technischen Systems quantitativ erfasst/misst. Der Sensor gibt einen Messwert oder Wert der Messgröße aus. Physikalische Größen können Druck, Gewicht, Beschleunigung, Lichtstärke, Temperatur, Feuchtigkeit, Strahlung, Schall, magnetischer Fluss, Drehzahl, etc. sein.

Unter einem "generativen, maschinelle Lernmodell" kann insbesondere ein künstliches, neuronales Netz verstanden werden, das dazu eingerichtet ist, Daten zu generieren. Vorzugsweise ist das generative, maschinelle Lernmodell mittels Trainingsdaten trainiert, wobei Gewichtungen der künstlichen Neuronen derart eingestellt werden, in Abhängigkeit von Eingabedaten Ausgabedaten zu reproduzieren. Das generative, maschinelle Lernmodell kann insbesondere ein Schätzer auf Basis Generative Adversarial Networks sein.

Es ist ein Vorteil der vorliegenden Erfindung, dass Werte von physikalischen Größen eines technischen Systems auf einfache Weise abgeschätzt werden können, ohne diese mittels eines realen Sensors messen zu müssen. Dazu wird ein generatives, maschinelles Lernmodell trainiert und bereitgestellt, das in Abhängigkeit eines Messwerts des technischen Systems einen Wert einer physikalischen Größe ausgibt. Insbesondere kann auch eine zeitliche Vorhersage eines Werts in Abhängigkeit eines vorgegebenen Messwerts berechnet werden. Die Abschätzung bzw. die Vorhersage ist insbesondere rechnerisch effizienter als das Durchführen einer computergestützten Simulation. Außerdem kann die Vorrichtung kontinuierliche Werte einer physikalischen Größe liefern, wohingegen reale Messungen oft diskontinuierlich sind. Die Vorrichtung kann somit insbesondere als ein virtueller Sensor verstanden werden.

In einer Ausführungsform der Vorrichtung kann das generative, maschinelle Lernmodell mittels Generative Adversarial Networks eingerichtet sein.

Generative Adversarial Networks (GANs) gehören zu den künstlichen, neuronalen Netzen. Sie können genutzt werden, um Daten zu generieren - im Gegensatz zu anderen künstlichen, neuronalen Netzen, die typischerweise Daten klassifizieren. Generative Adversarial Networks bestehen aus zwei neuronalen Netzen, die miteinander kombiniert werden. Das Training der beiden neuronalen Netzwerke verfolgt zwei entgegengesetzte Ziele. Das eine Netzwerk wird als Diskriminator bezeichnet, das andere als Generator. Die beiden Netzwerke werden gemeinsam mittels Trainingsdaten derart trainiert, dass der Generator (synthetische) Daten generiert, die der Diskriminator als authentisch einordnet. Nach dem Training kann der Generator als generatives, maschinelles Lernmodell, auch als Schätzer bezeichnet, ausgegeben und genutzt werden. Generative Adversarial Networks können insbesondere auch für zeitabhängige Anwendungen, wie z.B. zur Vorhersage von Daten, genutzt werden.

In einer Ausführungsform der Vorrichtung kann das generative, maschinelle Lernmodell derart eingerichtet sein, in Abhängigkeit mindestens eines Werts einer ersten physikalischen Größe des zweiten technischen Systems zu einem ersten Zeitpunkt mindestens einen Wert einer zweiten physikalischen Größe dieses technischen Systems zu einem zweiten Zeitpunkt zu erzeugen, wobei der zweite Zeitpunkt zeitlich nach dem ersten Zeitpunkt liegt.

Insbesondere kann die Vorrichtung eine Prognose von zukünftigen Messwerten ausgeben. Dafür ist das generative, maschinelle Lernmodell vorzugsweise so eingerichtet, dass es abhängig von einem vorgegebenen Messwert zu einem ersten Zeitpunkt einen Wert einer physikalischen Größe zu einem späteren Zeitpunkt ausgeben kann.

In einer Ausführungsform der Vorrichtung kann der Wert der zweiten physikalischen Größe des ersten technischen Systems nicht direkt oder nicht ausreichend mittels eines physikalischen Sensors messbar sein.

Vorzugsweise kann die Vorrichtung dazu genutzt werden, Werte von physikalischen Größen zu bestimmen, die nicht, nur schwer oder lediglich ungenau mittels eines realen Sensors messbar sind. Beispielsweise kann es sich um einen Wert einer Größe an einer schwer zugänglichen Messposition handeln oder die Umgebungsbedingungen verhindern die Nutzung eines realen Sensors/Hardware-Sensors. Außerdem kann die Vorrichtung genutzt werden, um eine Vielzahl von Werten zu bestimmen, ohne dass eine entsprechende Menge an physikalischen Sensoren benötigt wird. Dies spart insbesondere Kosten.

In einer Ausführungsform der Vorrichtung kann das generative, maschinelle Lernmodell anhand von Simulationsdaten einer computergestützten Simulation des zweiten technischen Systems eingerichtet sein, wobei die Simulationsdaten mindestens einen Wert der ersten physikalischen Größe und mindestens einen Wert der zweiten physikalischen Größe des zweiten technischen Systems umfassen.

Vorzugsweise wird das generative, maschinelle Lernmodell mittels Trainingsdaten trainiert und wird trainiert bereitgestellt. Das Lernmodell wird vorzugsweise für ein technisches System trainiert, das dem ersten technischen System zumindest teilweise entspricht. Trainingsdaten können vorzugsweise Simulationsdaten einer computergestützten Simulation des zweiten technischen Systems sein. Insbesondere kann das Lernmodell anhand einer komplexen, computergestützten Simulation für ein zweites technisches System trainiert werden.

In einer Ausführungsform der Vorrichtung kann das generative, maschinelle Lernmodell anhand von Messwerten des zweiten technischen Systems eingerichtet sein, wobei die Messwerte mindestens einen Wert der ersten physikalischen Größe und mindestens einen Wert der zweiten physikalischen Größe des zweiten technischen Systems umfassen.

Alternativ oder zusätzlich zu den Simulationsdaten können die Trainingsdaten auch Messwerte des zweiten technischen Systems umfassen.

In einer Ausführungsform kann die Vorrichtung eine Recheneinheit für künstliche Intelligenz umfassen.

Unter einer "Recheneinheit für künstliche Intelligenz" kann im Zusammenhang der Erfindung insbesondere ein KI-Beschleuniger oder eine Neural Processing Unit (NPU) verstanden werden. Bei einer solchen Recheneinheit handelt es sich vorzugsweise um eine Recheneinheit, die spezifisch für eine Berechnung einer künstlichen Intelligenz geeignet ist, d.h. eine spezifische Recheneinheit für KI bzw. eine Recheneinheit, die dafür geeignet ist, eine KI-basierte Applikation auszuführen.

In einer Ausführungsform kann die Vorrichtung als virtueller Sensor realisiert sein.

Ein virtueller Sensor - auch als Softsensor bezeichnet - ist insbesondere dazu eingerichtet, in Abhängigkeit mindestens eines Messwerts und mittels des generativen maschinellen Lernmodells einen Wert einer weiteren physikalischen Größe abzuschätzen/zu berechnen.

Ein weiterer Aspekt der Erfindung betrifft ein computerimplementiertes Verfahren zum Erfassen eines Werts einer physikalischen Größe eines ersten technischen Systems, wobei das erste technische System durch eine erste Systemangabe gekennzeichnet ist, mit den Verfahrensschritten:
- Einlesen eines mittels eines physikalischen Sensors erfassten Messwerts einer ersten physikalischen Größe des ersten technischen Systems,
- Einlesen eines generativen, maschinellen Lernmodells, wobei
   - das generative, maschinelle Lernmodell eingerichtet ist, in Abhängigkeit mindestens eines Werts einer ersten physikalischen Größe eines zweiten technischen Systems mindestens einen Wert einer zweiten physikalischen Größe des zweiten technischen Systems zu erzeugen und auszugeben,
   - und das zweite technische System durch eine zweite Systemangabe gekennzeichnet ist und die zweite Systemangabe mit der ersten Systemangabe zumindest teilweise übereinstimmt,
- Generieren eines Werts einer zweiten physikalischen Größe des ersten technischen Systems in Abhängigkeit des Messwerts der ersten physikalischen Größe mittels des generativen, maschinellen Lernmodells, wobei die erste physikalische Größe des ersten technischen Systems der ersten physikalischen Größe des zweiten technischen Systems und die zweite physikalische Größe des ersten technischen Systems der zweiten physikalischen Größe des zweiten technischen Systems entspricht, und
- Ausgeben des generierten Werts der zweiten physikalischen Größe des ersten technischen Systems.

Das Verfahren kann insbesondere zumindest teilweise computer-/rechnergestützt bzw. computerimplementiert sein. Unter "computer-/rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Ein weiterer Aspekt der Erfindung betrifft ein computerimplementiertes Verfahren zum Bereitstellen eines generativen, maschinellen Lernmodells zur Anwendung in einem oben erwähnten Verfahren, mit den Verfahrensschritten:
- Einlesen von Trainingsdaten eines technischen Systems, wobei die Trainingsdaten mindestens einen Wert einer ersten physikalischen Größe und mindestens einen Wert einer zweiten physikalischen Größe des technischen Systems umfassen,
- Einlesen eines generativen, maschinellen Lernmodells,
- Trainieren des generativen, maschinellen Lernmodells mittels der Trainingsdaten und eines Diskriminator-Netzwerks derart, dass das generative maschinelle Lernmodell in Abhängigkeit des Werts der ersten physikalischen Größe den Wert der zweiten physikalischen Größe erzeugt und ausgibt, und
- Ausgeben des trainierten, maschinellen Lernmodells zum Erfassen eines Werts einer physikalischen Größe eines technischen Systems.

In einer Ausführungsform dieses Verfahrens können die Trainingsdaten Simulationsdaten einer computergestützten Simulation und/oder Messdaten des technischen Systems sein.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen schematisch dargestellt und werden anhand der nachfolgenden Beschreibung näher erläutert. Es zeigen:
- Fig. 1:: ein Ausführungsbeispiel der erfindungsgemäßen Vorrichtung;
- Fig. 2:: ein Ausführungsbeispiel des erfindungsgemäßen Verfahrens zum Erfassen eines Werts einer physikalischen Größe eines ersten technischen Systems;
- Fig. 3:: ein Ausführungsbeispiel des erfindungsgemäßen Verfahrens zum Bereitstellen eines generativen, maschinellen Lernmodells;
- Fig. 4:: ein weiteres Ausführungsbeispiel des erfindungsgemäßen Verfahrens zum Bereitstellen eines generativen, maschinellen Lernmodells; und
- Fig. 5:: ein weiteres Ausführungsbeispiel des erfindungsgemäßen Verfahrens zum Erfassen eines Werts einer physikalischen Größe eines ersten technischen Systems.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

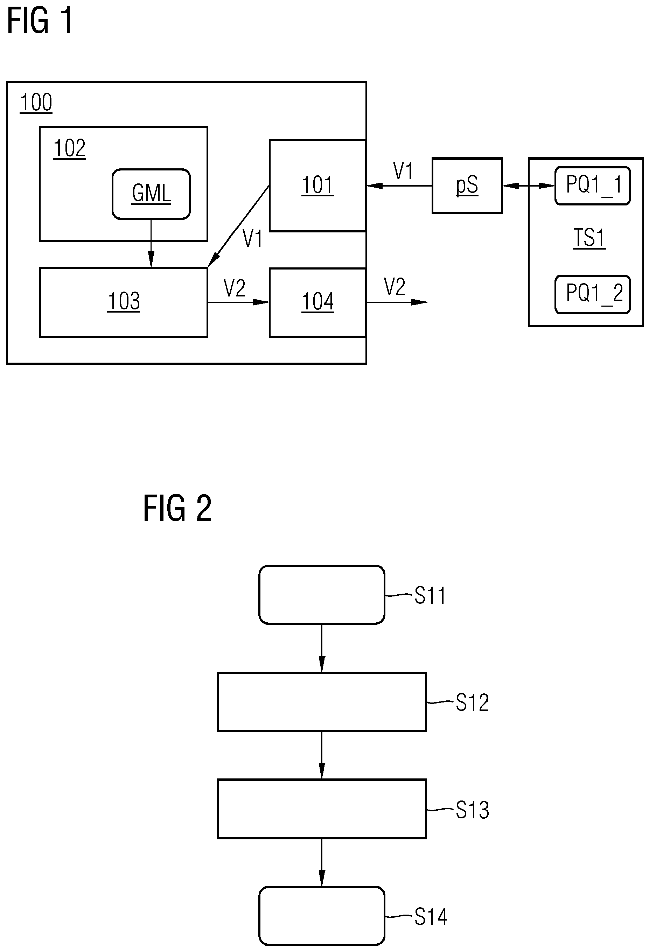

Figur 1 zeigt schematisch ein Ausführungsbeispiel einer erfindungsgemäßen Vorrichtung 100 zum Erfassen eines Werts einer physikalischen Größe eines ersten technischen Systems TS1. Das erste technische System TS1 kann beispielsweise eine elektrische Maschine, wie z.B. ein Motor sein. Das erste technische System TS1 weist insbesondere eine Systemangabe auf, die beispielsweise Parameter und/oder einen Typ des technischen Systems TS1 beschreibt. Beispielsweise beschreibt die Systemangabe des Motors eine Leistung oder einen Motortyp.

Der Motor TS1 weist verschiedene physikalische Größen auf, die mittels physikalischer Sensoren/Hardware-Sensoren pS gemessen bzw. überwacht werden können. Beispielsweise kann eine erste physikalische Größe PQ1_1 eine Drehzahl des Motors TS1 mittels eines physikalischen Sensors pS gemessen und mindestens ein Messwert V1 erfasst werden.

Es soll ein Wert einer zweiten physikalischen Größe PQ1_2 des Motors TS1 ermittelt werden. Beispielsweise ist die zweite physikalische Größe PQ1_2 eine Temperatur des Motors, welche beispielsweise nicht oder nur schwer oder mit einer gewissen Unsicherheit durch einen realen Sensor erfasst werden kann. Die erste physikalische Größe PQ1_1 und die zweite physikalische Größe PQ1_2 können insbesondere verschieden sein. Beispielsweise kann es sich bei der ersten physikalischen Größe PQ1_1 um eine Drehzahl und bei der zweiten physikalischen Größe um eine Temperatur des Motors TS1 handeln.

Alternativ können die erste physikalische Größe PQ1_1 und die zweite physikalische Größe PQ1_2 auch gleich bzw. gleichartig sein. Beispielsweise können dann beide physikalische Größen PQ1_1, PQ1_2 eine Temperatur betreffen, beispielsweise an verschiedenen Positionen des Motors TS1.

So können die erste und die zweite physikalische Größe beispielsweise gleich sein aber an unterschiedlichen Stellen und/oder zu unterschiedlichen Zeiten am technischen System erfasst werden. Vorzugsweise besteht eine Korrelation zwischen der ersten physikalischen Größe PQ1_1 und der zweiten physikalischen Größe PQ1_2. So kann ein maschinelles Lernmodell darauf trainiert werden, diese Korrelation zu reproduzieren.

Die Vorrichtung 100 kann beispielsweise als virtueller Sensor ausgestaltet sein. Die Vorrichtung 100 umfasst eine Schnittstelle 101, eine Speichereinheit 102, einen Messwertgenerator 103 und eine Ausgabeeinheit 104.

Die Schnittstelle 101 kann insbesondere mit dem physikalischen Sensor pS gekoppelt sein. Die Schnittstelle 101 ist derart eingerichtet, den Messwert V1 der ersten physikalischen Größe PQ1_1 einzulesen. Vorzugsweise kann die Schnittstelle 101 noch weitere Messwerte von weiteren physikalischen Größen des Motors TS1 einlesen. Insbesondere kann die Schnittstelle 101 Messwerte kontinuierlich oder in regelmäßigen Zeitabständen einlesen.

Die Speichereinheit 102 speichert ein trainiertes generatives, maschinelles Lernmodell GML, beispielsweise einen trainierten Generator bzw. Schätzer, der mittels Generativ Adversarial Networks konditioniert/trainiert wurde.

Das generative maschinelle Lernmodell GML ist dazu eingerichtet, in Abhängigkeit mindestens eines Werts einer ersten physikalischen Größe eines zweiten technischen Systems mindestens einen Wert einer zweiten physikalischen Größe des zweiten technischen Systems zu erzeugen und auszugeben, wobei das zweite technische System durch eine zweite Systemangabe gekennzeichnet ist und die zweite Systemangabe mit der ersten Systemangabe zumindest teilweise übereinstimmt. Das generative maschinelle Lernmodell GML ist vorzugsweise für ein technisches System trainiert, das dem ersten technischen System, d.h. dem Motor, TS1, gemäß einer Vorgabe entspricht. Vorzugsweise ist das zweite technische System ebenfalls ein Motor TS2. Dieser zweite Motor TS2 ist ebenfalls durch eine Systemangabe gekennzeichnet, beispielsweise durch einen Motortyp. Es kann somit beispielsweise geprüft werden, ob die Systemangaben, wie z.B. die Motortypen, des ersten Motors TS1 und des zweiten Motors TS2 übereinstimmen, um zu ermitteln, ob das generative maschinelle Lernmodell GML für den ersten Motor TS1 geeignet eingerichtet ist.

Alternativ kann das generative maschinelle Lernmodell GML auch für das erste technische System TS1 trainiert worden sein, d.h. das zweite technische System TS2 stimmt in diesem Fall mit dem ersten technischen System TS2 überein.

Das generative, maschinelle Lernmodell GML wurde vorzugsweise mittels Simulationsdaten und/oder Messdaten des zweiten technischen Systems trainiert.

Das generative, maschinelle Lernmodell GML kann insbesondere dazu eingerichtet sein, in Abhängigkeit eines Messwerts zu einem ersten Zeitpunkt, einen Wert einer physikalischen Größe zu einem späteren Zeitpunkt auszugeben. Folglich kann mittels des generativen, maschinellen Lernmodells GML eine Messwertprognose durchgeführt werden.

Das generative, maschinelle Lernmodell GML und der Messwert V1 werden vom Messwertgenerator 103 eingelesen. Der Messwertgenerator ist dazu eingerichtet, mittels des generativen, maschinellen Lernmodells GML einen Wert V2 der Temperatur PQ1_2 des Motors TS1 zu bestimmen. Dazu wird der Messwert V1 dem generativen, maschinellen Lernmodell GML übergeben und dieses ausgeführt. So bestimmt der Messwertgenerator in Abhängigkeit des Messwerts V1 einen Wert V2 der Temperatur PQ1_2.

Die Speichereinheit 102 kann beispielsweise eine Vielzahl von generativen, maschinellen Lernmodellen GML umfassen, die für das erste technische System/den Motor TS1 geeignet sind. Eine Eignung kann insbesondere anhand der Systemangabe ermittelt werden. Ein jeweiliges generatives, maschinelles Lernmodell ist insbesondere für die Erzeugung eines Werts einer vorbestimmten physikalischen Größe in Abhängigkeit eines Werts einer vorbestimmten physikalischen Größe eingerichtet.

Die Vorrichtung 100 kann beispielsweise eine Selektionseinheit (nicht dargestellt) umfassen, die derart eingerichtet ist, in Abhängigkeit der ersten physikalischen Größe PQ1_1 ein geeignetes generatives, maschinelles Lernmodell zu selektieren, welches eingerichtet ist, einen Wert einer zweiten physikalischen Größe in Abhängigkeit des Messwerts dieser ersten physikalischen Größe PQ1_1 zu generieren.

Die Ausgabeeinheit 104 ist dazu eingerichtet, den Messwert V2 der Temperatur PQ1_2 auszugeben. Beispielsweise kann der Motor TS1 anhand dieses Temperaturwerts V2 überwacht und/oder gesteuert werden. Es ist auch möglich, den Temperaturwert V2 für eine Detektion einer Fehlfunktion des Motors TS1 zu nutzen.

Die Vorrichtung 100 kann beispielsweise eine Recheneinheit für künstliche Intelligenz, wie z.B. eine Neural Processing Unit, umfassen, die derart eingerichtet ist, das generative maschinelle Lernmodell GML effizient auszuführen. Die Vorrichtung 100 kann beispielsweise am technischen System TS1 selbst angebracht werden. Alternativ kann die Vorrichtung 100 auch lediglich mit dem technischen System gekoppelt, z.B. in der Cloud, realisiert sein.

Figur 2 zeigt ein Ausführungsbeispiel eines erfindungsgemäßen Verfahrens zum Erfassen eines Werts einer physikalischen Größe eines ersten technischen Systems als Ablaufdiagramm.

Im ersten Schritt S11 des Verfahrens wird ein Messwert einer ersten physikalischen Größe des ersten technischen Systems eingelesen. Der Messwert wurde beispielsweise mittels eines realen Sensors erfasst.

Im nächsten Schritt S12 des Verfahrens wird ein generatives, maschinelles Lernmodell bereitgestellt. Beispielsweise ist das generative, maschinelle Lernmodell in einer Speichereinheit gespeichert und wird von dort abgerufen. Beispielsweise liegt das generative, maschinelle Lernmodell als Graph in einer Datenstruktur vor und kann derart eingelesen werden.

Der erste Schritt S11 und der zweite Schritt S12 können auch parallel oder in umgekehrter Reihenfolge durchgeführt werden.

Das generative, maschinelle Lernmodell ist insbesondere dazu geeignet, Werte einer physikalischen Größe des technischen Systems zu generieren bzw. vorherzusagen. Dazu ist das generative, maschinelle Lernmodell für ein zweites technisches System anhand bereitgestellter Trainingsdaten darauf trainiert, in Abhängigkeit mindestens eines Werts einer ersten physikalischen Größe des zweiten technischen Systems mindestens einen Wert einer zweiten physikalischen Größe des zweiten technischen Systems zu erzeugen. Somit ist das generative, maschinelle Lernmodell spezifisch für diese physikalischen Größen dieses technischen Systems eingerichtet. Das zweite technische System entspricht vorzugsweise im Wesentlichen dem ersten technischen System, d.h. die Systemangabe des ersten technischen Systems entspricht im Wesentlichen der Systemangabe des zweiten technischen Systems. Dies kann beispielsweise durch einen Vergleich der jeweiligen Systemangaben des ersten und zweiten technischen Systems ermittelt werden. In anderen Worten, es kann beispielsweise geprüft werden, ob das erste technische System dem zweiten technischen System im Wesentlichen entspricht. Beispielsweise kann es sich um den gleichen Systemtyp handeln und/oder Parameter des ersten und zweiten Systems stimmen überein. In anderen Worten, das generative maschinelle Lernmodell wird vorzugsweise für das erste technische System trainiert, wobei beispielsweise Simulationsdaten und/oder Messdaten eines zweiten technischen Systems genutzt werden können.

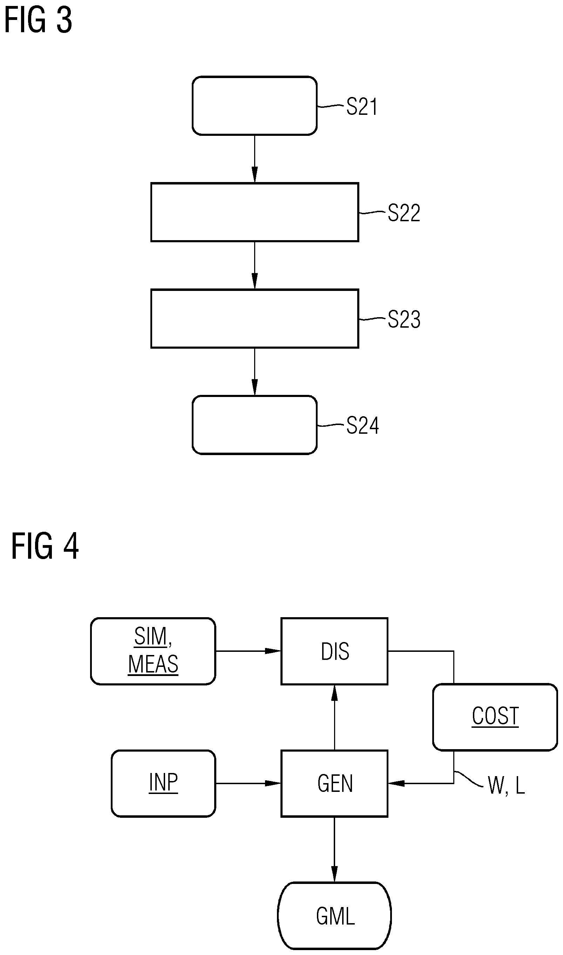

Insbesondere kann anhand einer Systemangabe des ersten technischen Systems ein generatives, maschinelles Lernmodell selektiert werden, das für ein zweites technisches System trainiert wurde, wobei die Systemangabe des zweiten technischen Systems mit der Systemangabe des ersten technischen Systems verglichen wird. Beispielsweise ist das generative, maschinelle Lernmodell anhand von Trainingsdaten aus einer komplexen, computerbasierten Simulation eines zweiten technischen Systems eingerichtet worden, wie beispielhaft anhand Fig. 3 erläutert.

Im nächsten Schritt S13 wird das trainierte generative, maschinelle Lernmodell ausgeführt. Dabei wird in Abhängigkeit des eingelesenen Messwerts des ersten technischen Systems ein Wert einer zweiten physikalischen Größe des ersten technischen Systems bestimmt, wobei die erste physikalische Größe des ersten technischen Systems der ersten physikalischen Größe des zweiten technischen Systems und die zweite physikalische Größe des ersten technischen Systems der zweiten physikalischen Größe des zweiten technischen Systems entspricht. So kann insbesondere eine Prüfung durchgeführt werden, wobei geprüft wird, ob die erste physikalische Größe des ersten technischen Systems der ersten physikalischen Größe des zweiten technischen Systems und die zweite physikalische Größe des ersten technischen Systems der zweiten physikalischen Größe des zweiten technischen Systems entspricht. Bei einem positiven Prüfergebnis kann das generative, maschinelle Lernmodell ausgeführt werden.

Dem generativen, maschinellen Lernmodell wird somit insbesondere ein Wert der ersten physikalischen Größe des ersten technischen Systems übermittelt, die der ersten physikalischen Größe des zweiten technischen Systems entspricht. Das generative, maschinelle Lernmodell gibt dann lediglich einen Wert einer physikalischen Größe aus, die der zweiten physikalischen Größe des zweiten technischen Systems entspricht.

Der Messwert wird dem generativen, maschinellen Lernmodell als Eingabewert übergeben. Das trainierte Lernmodell generiert anhand dieses Messwerts einen Wert einer zweiten physikalischen Größe des ersten technischen Systems.

Im nächsten Schritt S14 wird der generierte Wert der zweiten physikalischen Größe des ersten technischen Systems ausgegeben.

Figur 3 zeigt ein Ausführungsbeispiel eines erfindungsgemäßen Verfahrens zum Bereitstellen eines generativen, maschinellen Lernmodells als Ablaufdiagramm. Das generative, maschinelle Lernmodell wird beispielsweise zum Erfassen eines Werts einer physikalischen Größe eines ersten technischen Systems eingerichtet/trainiert und derart bereitgestellt.

Im ersten Schritt S21 des Verfahrens werden Trainingsdaten eines technischen Systems eingelesen. Die Trainingsdaten umfassen mindestens einen Wert einer ersten physikalischen Größe und mindestens einen Wert einer zweiten physikalischen Größe dieses technischen Systems. Vorzugsweise sind die erste physikalische Größe und die zweite physikalische Größe korreliert. Die Trainingsdaten können beispielsweise Simulationsdaten einer computergestützten Simulation des technischen Systems und/oder Messdaten des technischen Systems sein.

Das generative, maschinelle Lernmodell kann beispielsweise mittels Generative Adversarial Networks (GMLs), dt. "erzeugende gegnerische Netzwerke", eingerichtet werden. Es handelt sich hierbei insbesondere um künstliche neuronale Netze/Netzwerke. Eines dieser Netzwerke wird Diskriminator genannt und der andere Generator. Bei einer Reihe von Trainingsdaten, d. h. Paaren von Eingabedaten x und Ausgabedaten y, wird das Diskriminatornetzwerk darauf trainiert, p(y|x) vorherzusagen, d.h. die Wahrscheinlichkeit, y für bestimmte Eingänge x zu erlangen. Der Generator hingegen wird trainiert, die Wahrscheinlichkeit für entsprechenden Merkmale x zu bestimmen, d.h. p(x|y). Mit anderen Worten, der Generator wird darauf trainiert, x für bestimmte Ausgaben y zu finden. Beispielsweise sind die Eingabedaten x der zumindest eine Wert der ersten physikalischen Größe und die Ausgabedaten y der zumindest eine Wert der zweiten physikalischen Größe. Das Zusammenspiel zwischen diesen beiden Netzwerken ist im Wesentlichen ein Nullsummenspiel gegeneinander: Der Generator versucht, neue Dateninstanzen zu generieren, die dann dem Diskriminatornetzwerk zugeführt werden, das entscheidet, ob es sich bei diesen Daten um tatsächliche Daten handelt oder ob es sich um vom Generatornetzwerk generierte Daten handelt. Das Training des Generators bedeutet folglich, synthetische Daten zu generieren, die vom Diskriminator als authentisch angesehen werden. Mit anderen Worten, während mit dem Diskriminator versucht wird, reale von generierten Daten zu trennen, wird mit dem Generator versucht, Daten zu generieren, um den Diskriminator zu täuschen.

Der Generator kann folglich so eingerichtet werden, dass der Generator Werte einer zweiten physikalischen Größe generiert und ausgibt. Der trainierte Generator bzw. Schätzer kann dann als trainiertes generatives, maschinelles Lernmodell ausgegeben werden.

Vorzugsweise wird das generative, maschinelle Lernmodell so anhand der Trainingsdaten trainiert, dass es einen Wert für eine vorbestimmte zweite physikalische Größe in Abhängigkeit eines vorgegebenen Werts einer ersten physikalischen Größe ausgibt. Folglich wird das Lernmodell so trainiert, Werte für eine vorgegebene physikalische Größe eines technischen Systems zu bestimmen. Das generative, maschinelle Lernmodell lernt somit, die vorgegebenen Werte zu reproduzieren. Damit kann ein virtueller Sensor realisiert werden, der Werte für eine bestimmte physikalische Größe ausgibt. Zusätzlich kann das generative, maschinelle Lernmodell auch darauf trainiert werden, Werte für einen zukünftigen Zeitpunkt auszugeben. So kann das generative, maschinelle Lernmodell für die Prognose von Werten genutzt werden.

Insbesondere kann das generative, maschinelle Lernmodell darauf trainiert werden, einen Wert für eine zweite physikalische Größe zu einem bestimmten Zeitpunkt in Abhängigkeit einer ersten physikalischen Größe zu einem vorangegangenen Zeitpunkt auszugeben. Dafür werden insbesondere Trainingsdaten mit Zeitstempeln bereitgestellt, um eine Zeitabhängigkeit zu trainieren.

Im nächsten Schritt S24 wird das trainierte generative, maschinelle Lernmodell ausgegeben. Beispielsweise kann das trainierte Lernmodell als gerichteter Graph (engl. "computational graph") ausgegeben werden.

Figur 4 zeigt in schematischer Darstellung ein weiteres Ausführungsbeispiel des erfindungsgemäßen Verfahrens zum Bereitstellen eines generativen, maschinellen Lernmodells, z.B. für eine wie in Fig. 1 gezeigte Vorrichtung.

Das generative, maschinelle Lernmodel GML, das zum Abschätzen eines Werts einer physikalischen Größe eines technischen Systems eingerichtet ist, kann auf Basis von Generative Adversarial Networks trainiert werden. Generative Adversarial Networks umfassen ein Diskriminator-Netzwerk DIS und ein Generator-Netzwerk GEN, wobei beide als künstliche neuronale Netze ausgestaltet sind.

Zum Training, auch als Konditionierung bezeichnet, dieser künstlichen neuronalen Netze werden Trainingsdaten benötigt. Beim Training werden die Gewichte W der künstlichen neuronalen Netze angepasst. Zusätzlich können auch die Schichten L der künstlichen neuronalen Netze angepasst werden. Vorzugsweise werden die Schichten L vor dem Training festgelegt.

Als Trainingsdaten werden beispielsweise Simulationsdaten SIM einer computergestützten Simulation eines technischen Systems und/oder Messdaten bzw. Sensordaten MEAS des technischen Systems bereitgestellt. Vorzugsweise handelt es sich bei den Messdaten MEAS um Daten detaillierter Messungen am technischen System, z.B. mit hoher Genauigkeit und/oder hoher Zeitauflösung.

Die Trainingsdaten werden für das gemeinsame Training des Diskriminators DIS und des Generators GEN eingelesen. Das Training erfolgt durch Eingabe von Eingabewerten INP für den Generator GEN.

Der Diskriminator DIS und der Generator GEN werden insbesondere abwechselnd trainiert, wobei eine vorgegebene Kostenfunktion COST minimiert wird. Es handelt sich folglich um einen iterativen Prozess. Zunächst wird der Diskriminator DIS anhand der Messdaten und/oder Simulationsdaten trainiert. Anschließend wird der Generator GEN darauf trainiert, Werte zu generieren, wobei diese Ausgabewerte des Generators als Eingabewerte für den Diskriminator DIS genutzt werden. Der Diskriminator DIS ermittelt die "realen/echten" und die "gefälschten" Werte. Anschließend wird wieder der Diskriminator DIS trainiert, um die Klassifizierung der Werte zu verbessern. So werden der Generator GEN und der Diskriminator DIS gemeinsam trainiert. Das abwechselnde Training wird so lange wiederholt, bis der Generator GEN Werte generiert, die der Diskriminator DIS nicht von den "echten/realen" Werten unterscheiden kann. Beispielsweise kann dafür ein Gütekriterium festgelegt werden.

Nach dem Training wird der trainierte Generator GEN als generatives, maschinelles Lernmodell GML zum Erfassen von Werten einer physikalischen Größe eines technischen Systems ausgegeben. Das trainierte generative, maschinelle Lernmodell GML kann beispielsweise als virtueller Sensor genutzt werden.

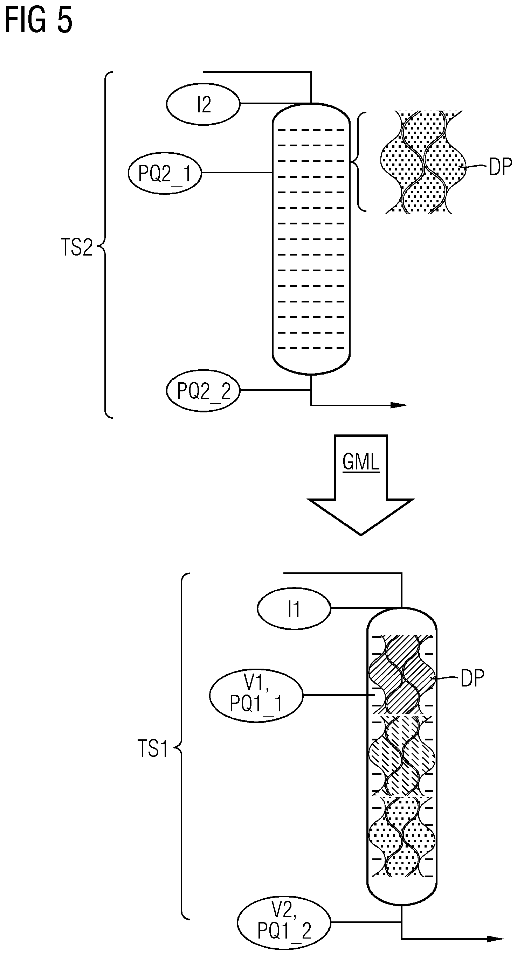

Figur 5 zeigt in schematischer Darstellung ein weiteres Ausführungsbeispiel des erfindungsgemäßen Verfahrens zum Erfassen eines Werts einer physikalischen Größe eines ersten technischen Systems TS1.

Das erste technische System TS1 kann beispielsweise eine Destillationskolonne (oder Rektifikationskolonne) zur thermischen Trennung von Gemischen sein. Es soll ein Wert V2 einer Temperatur PQ1_2 am Kolonnensumpf der Destillationskolonne bestimmt werden. Beispielsweise kann die Temperatur dort nicht oder nur schwer mittels eines realen Sensors gemessen werden.

Der Temperaturwert PQ1_2 ist insbesondere abhängig von einer Stoffverteilung und/oder Stoffkonzentration innerhalb der Destillationskolonne TS1. Beispielsweise kann abhängig von einem ersten Wert I1 der Stoffkonzentration und/oder abhängig von einem ersten Temperaturwert V1 am oberen Ende (Kolonnenkopf) der Destillationskolonne der Temperaturwert V2 am Kolonnensumpf abgeschätzt werden. Die Abschätzung kann mittels eines dafür trainierten generativen, maschinellen Lernmodells GML erfolgen.

Das generative, maschinelle Lernmodell GML kann wie folgt für ein zweites technisches System TS2, z.B. eine zweite Destillationskolonne, trainiert werden. Vorzugsweise wird das generative, maschinelle Lernmodell GML für ein technisches System trainiert, das dem realen System zumindest ähnlich ist. In anderen Worten, das generative, maschinelle Lernmodell GML kann insbesondere für dasselbe technische System oder für ein anderes technisches System mit übereinstimmenden, vorgegebenen Systemangaben trainiert werden. Folglich kann das erste technische System TS1 und des zweite technische System TS2 dasselbe System oder gleich sein, wobei dies über die Systemangaben definiert ist. Eine Systemangabe betrifft beispielsweise einen Typ, eine Größe, etc. der Destillationskolonne.

Beispielsweise kann das generative, maschinelle Lernmodell GML für eine zweite Destillationskolonne TS2, deren Systemangabe der Systemangabe der ersten Destillationskolonne entspricht, trainiert werden.

Vorzugsweise werden Simulationsdaten aus einer computergestützten Simulation des Destillationsprozesses DP in der zweiten Destillationskolonne als Trainingsdaten bereitgestellt. Die Simulationsdaten umfassen beispielsweise Werte der Stoffkonzentration I2, Werte einer Temperatur PQ2_1 am Kolonnenkopf und Werte einer Temperatur PQ2_2 am Kolonnenende der zweiten Destillationskolonne.

Diese Simulationsdaten können für das Training des generativen, maschinelles Lernmodells GML genutzt werden. Das generative maschinelle Lernmodell GML wird derart trainiert, in Abhängigkeit des Werts der Temperatur am Kolonnenkopf und/oder des Werts der Stoffkonzentration I2 den Wert der der Temperatur am Kolonnenende zu reproduzieren.

Das derart trainierte generative, maschinelle Lernmodell GML kann zum Erfassen eines Werts V2 der Temperatur PQ1_2 am Kolonnensumpf der ersten Destillationskolonne angewandt werden. Dazu kann das generative, maschinelle Lernmodell GML beispielsweise auf einer Neural Processing Unit (NPU) ausgeführt werden. Dabei wird dem generativen, maschinellen Lernmodell GML mindestens ein Messwert V1, I1 der ersten Destillationskolonne als Eingabewert übergeben. So kann mittels des generativen, maschinelle Lernmodell GML ein Wert V2 der Temperatur PQ1_2 am Kolonnensumpf in Abhängigkeit des Werts der Temperatur PQ1_1 am Kolonnenkopf und/oder in Abhängigkeit des Werts der Stoffkonzentration I1 bestimmt werden. Insbesondere können mittels des generativen, maschinellen Lernmodells GML Werte des Destillationsprozesses DP in der ersten Destillationskolonne TS1 extrapoliert werden. So kann das generative, maschinelle Lernmodell GML als virtueller Sensor genutzt werden. Der generierte Wert V2 der Temperatur PQ1_2 am Kolonnensumpf kann anschließend ausgegeben werden. Beispielsweise kann der Wert V2 einem Bediener angezeigt und/oder einer Steuerung der Destillationskolonne zum Steuern des Destillationsprozesses übermittelt werden.

Alle beschriebenen und/oder gezeichneten Merkmale können im Rahmen der Erfindung vorteilhaft miteinander kombiniert werden.

## Patentansprüche

1. Vorrichtung (100) zum Erfassen eines Werts einer physikalischen Größe eines ersten technischen Systems, wobei das erste technische System (TS1) durch eine erste Systemangabe gekennzeichnet ist, umfassend:
- eine Schnittstelle (101), die derart eingerichtet ist, einen mittels eines physikalischen Sensors erfassten Messwert (V1) einer ersten physikalischen Größe (PQ1_1) des ersten technischen Systems (TS1) einzulesen,
- eine Speichereinheit (102), die derart eingerichtet ist, ein generatives, maschinelles Lernmodell (GML) zu speichern,
- wobei das generative, maschinelle Lernmodell (GML) eingerichtet ist, in Abhängigkeit mindestens eines Werts einer ersten physikalischen Größe eines zweiten technischen Systems mindestens einen Wert einer zweiten physikalischen Größe des zweiten technischen Systems zu erzeugen und auszugeben,
- wobei das zweite technische System durch eine zweite Systemangabe gekennzeichnet ist und die zweite Systemangabe mit der ersten Systemangabe zumindest teilweise übereinstimmt,
- einen Messwertgenerator (103), der derart eingerichtet ist, mittels des generativen, maschinellen Lernmodells (GML) einen Wert (V2) einer zweiten physikalischen Größe (PQ1_2) des ersten technischen Systems in Abhängigkeit des Messwerts (V1) der ersten physikalischen Größe (PQ1_1) zu generieren, wobei die erste physikalische Größe (PQ1_1) des ersten technischen Systems der ersten physikalischen Größe (PQ2_1) des zweiten technischen Systems und die zweite physikalische Größe des ersten technischen Systems der zweiten physikalischen Größe des zweiten technischen Systems entspricht, und
- eine Ausgabeeinheit (104), die derart eingerichtet ist, den generierten Wert (V2) der zweiten physikalischen Größe (PQ1-_2) des ersten technischen Systems (TS1) auszugeben.

2. Vorrichtung (100) nach Anspruch 1, wobei das generative, maschinelle Lernmodell mittels Generative Adversarial Networks eingerichtet ist.

3. Vorrichtung (100) nach einem der vorhergehenden Ansprüche, wobei das generative, maschinelle Lernmodell derart eingerichtet ist, in Abhängigkeit mindestens eines Werts einer ersten physikalischen Größe des zweiten technischen Systems zu einem ersten Zeitpunkt mindestens einen Wert einer zweiten physikalischen Größe dieses technischen Systems zu einem zweiten Zeitpunkt zu erzeugen, wobei der zweite Zeitpunkt zeitlich nach dem ersten Zeitpunkt liegt.

4. Vorrichtung (100) nach einem der vorhergehenden Ansprüche, wobei der Wert (V2) der zweiten physikalischen Größe (PQ1_2) des ersten technischen Systems nicht direkt oder nicht ausreichend mittels eines physikalischen Sensors messbar ist.

5. Vorrichtung (100) nach einem der vorhergehenden Ansprüche, wobei das generative, maschinelle Lernmodell anhand von Simulationsdaten einer computergestützten Simulation des zweiten technischen Systems eingerichtet ist, wobei die Simulationsdaten mindestens einen Wert der ersten physikalischen Größe und mindestens einen Wert der zweiten physikalischen Größe des zweiten technischen Systems umfassen.

6. Vorrichtung (100) nach einem der vorhergehenden Ansprüche, wobei das generative, maschinelle Lernmodell anhand von Messwerten des zweiten technischen Systems eingerichtet ist, wobei die Messwerte mindestens einen Wert der ersten physikalischen Größe und mindestens einen Wert der zweiten physikalischen Größe des zweiten technischen Systems umfassen.

7. Vorrichtung (100) nach einem der vorhergehenden Ansprüche, wobei die Vorrichtung eine Recheneinheit für künstliche Intelligenz umfasst.

8. Vorrichtung (100) nach einem der vorhergehenden Ansprüche, wobei die Vorrichtung als virtueller Sensor realisiert ist.

9. Computerimplementiertes Verfahren zum Erfassen eines Werts einer physikalischen Größe eines ersten technischen Systems, wobei das erste technische System (TS1) durch eine erste Systemangabe gekennzeichnet ist, mit den Verfahrensschritten:
- Einlesen (S11) eines mittels eines physikalischen Sensors erfassten Messwerts (V1) einer ersten physikalischen Größe (PQ1_1) des ersten technischen Systems (TS1),
- Einlesen (S12) eines generativen, maschinellen Lernmodells, wobei
- das generative, maschinelle Lernmodell (GML) eingerichtet ist, in Abhängigkeit mindestens eines Werts einer ersten physikalischen Größe eines zweiten technischen Systems mindestens einen Wert einer zweiten physikalischen Größe des zweiten technischen Systems zu erzeugen und auszugeben,
- und das zweite technische System durch eine zweite Systemangabe gekennzeichnet ist und die zweite Systemangabe mit der ersten Systemangabe zumindest teilweise übereinstimmt,
- Generieren (S13) eines Werts (V2) einer zweiten physikalischen Größe (PQ1_2) des ersten technischen Systems in Abhängigkeit des Messwerts (V1) der ersten physikalischen Größe (PQ1_1) mittels des generativen, maschinellen Lernmodells, wobei die erste physikalische Größe (PQ1_1) des ersten technischen Systems der ersten physikalischen Größe des zweiten technischen Systems und die zweite physikalische Größe (PQ1_2) des ersten technischen Systems der zweiten physikalischen Größe des zweiten technischen Systems entspricht, und
- Ausgeben (S14) des generierten Werts (V2) der zweiten physikalischen Größe (PQ1_2) des ersten technischen Systems (TS1) .

10. Computerimplementiertes Verfahren zum Bereitstellen eines generativen, maschinellen Lernmodells zur Anwendung in einem Verfahren nach Anspruch 9, mit den Verfahrensschritten:
- Einlesen (S21) von Trainingsdaten eines technischen Systems, wobei die Trainingsdaten mindestens einen Wert einer ersten physikalischen Größe und mindestens einen Wert einer zweiten physikalischen Größe des technischen Systems umfassen,
- Einlesen (S22) eines generativen, maschinellen Lernmodells (GML),
- Trainieren (S23) des generativen, maschinellen Lernmodells (GML, GEN) mittels der Trainingsdaten (MEAS, SIM) und eines Diskriminator-Netzwerks (DIS) derart, dass das generative maschinelle Lernmodell in Abhängigkeit des Werts der ersten physikalischen Größe den Wert der zweiten physikalischen Größe erzeugt und ausgibt, und
- Ausgeben (S24) des trainierten generativen, maschinellen Lernmodells zum Erfassen eines Werts einer physikalischen Größe eines technischen Systems.

11. Computerimplementiertes Verfahren nach Anspruch 10, wobei die Trainingsdaten Simulationsdaten einer computergestützten Simulation und/oder Messdaten des technischen Systems sind.

12. Computerprogrammprodukt, das direkt in einen programmierbaren Computer ladbar ist, umfassend Programmcodeteile, die dazu geeignet sind, die Schritte des Verfahrens nach einem der Ansprüche 8 bis 11 durchzuführen.
